# EUROPEAN PATENT SPECIFICATION

(11) **EP 4 521 714 B1**
(45) Date of publication and mention of the grant of the patent: **14.10.2026**
(21) Application number: 23910569.5
(22) Date of filing: 26.12.2023
(51) Int. Cl.: H04L 67/12, H04L 9/06, H04L 67/125, H04W 12/03

(54) **COMMUNICATION SYSTEM AND METHOD BASED ON END-TO-END DATA ENCRYPTION**
SYSTEM UND VERFAHREN BASIEREND AUF ENDE-ZU-ENDE-DATENVERSCHLÜSSELUNGSKOMMUNIKATION
SYSTÈME ET PROCÉDÉ DE COMMUNICATION BASÉES SUR LE CHIFFREMENT DE DONNÉES DE BOUT EN BOUT

(30) Priority: 28.12.2022 CN 202211695670
(43) Date of publication of application: 12.03.2025
(73) Proprietor: Chery Automobile Co., Ltd., Wuhu, Anhui 241006 (CN)
(72) Inventor: ZHANG, Shibing, Wuhu, Anhui 241006 (CN); XU, Daxue, Wuhu, Anhui 241006 (CN); JIANG, Hao, Wuhu, Anhui 241006 (CN)
(74) Representative: Yang, Shu
(86) International application number: PCT/CN2023/141809
(87) International publication number: WO 2024/140644

(56) References cited:
- EP-A1- 2 453 606
- EP-B1- 1 260 942
- CN-A- 111 976 623
- CN-A- 114 666 760
- CN-A- 114 701 447
- CN-A- 115 987 505
- US-A1- 2019 068 361
- US-A1- 2020 151 362
- US-A1- 2021 357 344
- ANONYMOUS: "Autosar E2E Protocol Specification V.1.5.0 - Excerpt chapter 6.3", 31 October 2018 (2018-10-31), XP093311387, Retrieved from the Internet <URL:https://www.autosar.org/fileadmin/standards/R18-10_R4.4.0_R1.5.0/FO/AUTOSAR_PRS_E2EProtocol.pdf>
- ZHONG ZAIMIN; HUANG XI;ZHANG: "Realization of E2E Secure Communication Based on AUTOSAR", JISUANJI CELIANG YU KONGZHI - COMPUTER MEASUREMENT & CONTROL, JISUANJI CELIANG YU KONGZHI ZAZHISHE, BEIJING, CN, vol. 25, no. 10, 31 December 2017 (2017-12-31), CN , pages 217 - 220, XP009556202, ISSN: 1671-4598, DOI: 10.16526/j.cnki.11-4762/tp.2017.10.055

## Description

### TECHNICAL FIELD

The present disclosure relates to the field of data encryption communication, and in particular, relates to a communication system and method based on end-to-end data encryption.

### BACKGROUND

The statements in this part are provided merely as background information related to the present disclosure, and do not necessarily constitute prior art.

Electrification, Internet connectivity, intelligence, and sharing are increasingly becoming the trend for the future development of automobiles, which are diversified with new energy and new technologies. The intelligence of vehicles can provide a more comfortable driving environment and driving experience for drivers. However, intelligence brings a lot of security problems, especially when data in data transmission is intercepted and modified by a third party, resulting in a security problem of vehicle control.

US 2021357344 A1 discloses an embodiment method of operating a CAN bus comprises coupling a first device and second devices to the CAN bus via respective CAN transceiver circuits, and configuring the respective CAN transceiver circuits to set the CAN bus to a recessive level during transmission of messages via the CAN bus by the respective first device or second devices.

EP 1260942 B1 discloses an encryption process for a rolling code of a remote keyless entry system is described. The encryption process makes use of a command shift register (14), a security code shift register (16), and a sequence code shift register (18). The contents of these registers (14, 16, 18) is transmitted from a portable transmitter to a receiver associated with the vehicle in order to perform a desirable function. The command code shift register (14) provides the code of the function to be performed and the sequence code shift register (18) provides a sequence code for updating the sequence of the receiver. The security code shift register (16) includes a security code which is updated by a first and second pseudo random number generator (20, 22) after each transmission. Each of two pseudo random number generators (20, 22) include associated shift registers (24, 28) and exclusive NOR gates (26, 30) such that a first bit location and a tap bit location of each of the shift registers (24, 28) are exclusively NORed to provide a first bit location in the shift register (24, 28). A series of the bit locations of the first and second shift registers (24, 28) are exclusively ORed together to set the bits of the security code register (16).

### SUMMARY

To solve the above technical problem in the background, the present disclosure provides a communication system and method based on end-to-end data encryption, which can achieve the purpose of data protection and improve the stability of vehicle operation.

To achieve the above objectives, the present disclosure adopts the following technical solutions.

In a first aspect, a communication system based on end-to-end data encryption according to claim 1 is provided.

In a second aspect, a communication system based on end-to-end data encryption according to claim 2 is provided.

In a third aspect, a communication method based on end-to-end data encryption according to claim 4 is provided.

In a fourth aspect, a communication method based on end-to-end data encryption according to claim 5 is provided.

Compared with the prior art, the beneficial effects of the present disclosure are as follows.

The present disclosure provides a communication system based on end-to-end data encryption, wherein a sensor senses vehicle state information and transmits the sensed vehicle state information to a domain controller through an end-to-end communication protection protocol; and the domain controller acquires a control instruction based on the received vehicle state information, and transmits a corresponding control instruction to a corresponding actuator through the end-to-end communication protection protocol. The present disclosure uses the end-to-end communication protection protocol and achieves data protection by incorporating a variable cyclic code for data encryption, which enhances the stability of vehicle operation, makes the autonomous driving system more efficient, and improves the real-time performance of data-encrypted communication.

The advantages of the additional aspects of the present disclosure will be partially provided in the following description, become apparent from the following description, or be learned by the practice of the present disclosure.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of a communication system based on end-to-end data encryption according to some embodiments of the present disclosure; and
FIG. 2 is a flowchart of a communication method based on end-to-end data encryption according to some embodiments of the present disclosure.

The above accompanying drawings have shown the explicit embodiments of the present disclosure, which will be described in detail hereinafter. These accompanying drawings and text descriptions are not intended to limit the scope of the conception of the present disclosure in any way, but to illustrate the concept of the present disclosure to those skilled in the art with reference to specific embodiments.

### DETAILED DESCRIPTION

The technical solutions in the embodiments of the present disclosure will be described clearly and comprehensively hereinafter with reference to the accompanying drawings in the embodiments of the present disclosure, and it is apparent that the described embodiments are only a part, but not all of the embodiments of the present disclosure. All other embodiments obtained by those of ordinary skills in the art without creative efforts with respect to the embodiments in the present disclosure shall fall within the protection scope of the present disclosure.

It should be noted that the following detailed descriptions are exemplary and intended to provide further explanation of the present disclosure. Unless otherwise indicated, all technical and scientific terms used herein have the same meaning as commonly understood by those of ordinary skills in the art to which the present disclosure belongs.

In the embodiments of the present disclosure, the "cyclic redundancy check code" refers to a CRC checksum, which is used to check that data is not tampered with or corrupted during transmission.

The "counter code" refers to a counter used to ensure that messages arrive in the expected order and to detect lost or duplicate messages. In the case that the counter value at the receiving end does not match the expected value, it may have resulted from a lost or duplicate message. The counter increments with each message transmitted. Typically, the counter is a 4-bit value, meaning it ranges from 0 to 15, and the counter wraps around to 0 after reaching its maximum value.

The "data identifier" is configured to identify data, i.e., the Data ID. The data identifier is usually used for the CRC calculation but not actually for data transmission.

It should be noted that the terms used here are merely to describe specific embodiments and are not intended to limit the exemplary embodiments according to the present disclosure. As used herein, unless the context clearly indicates otherwise, the singular form is intended to include the plural form as well. In addition, it should be understood that when the terms "comprise" and/or "include" are used in the specification, they indicate the presence of features, steps, operations, devices, components, and/or combinations thereof.

As the automotive industry gradually moves towards electrification and intelligence, the software and hardware complexity of in-vehicle systems is increasing. How to ensure the security and reliability of data communication in these complex systems has become a focal point of concern in the industry. The end-to-end (E2E) communication protection protocol is a mechanism for protecting the integrity and security of message transmission. The mechanism ensures the security of communication by calculating and appending a check value at the transmitting end of a message and verifying the check value at the receiving end.

The implementation steps of the E2E communication protection protocol are as follows: defining communication nodes, and defining the transmitting end and receiving end of the communication; defining a data payload, and determining message data payload that needs protection; calculating a check value, and performing a hash calculation on the data payload at the transmitting end to generate a check value; appending a check value, and attaching the check value to the message data payload to form a complete message; transmitting the message, and transmitting the message containing the check value to the receiving end; and verifying the check value, and checking, by the receiving end, the received message according to the protocol-specified check algorithm.

At present, there is a vulnerability in vehicle communication, which is easily attacked by a hacker, and causes a threat to the safe and stable operation of the vehicle. To solve the problems existing in the prior art, embodiments of the present disclosure provide a communication system and method based on end-to-end data encryption, which achieves the purpose of data protection by incorporating a variable cyclic code for data encryption.

For clearer descriptions of the technical solutions and advantages of the present disclosure, the embodiments of the present disclosure are further described in detail hereinafter with reference to the accompanying drawings.

### First Embodiment

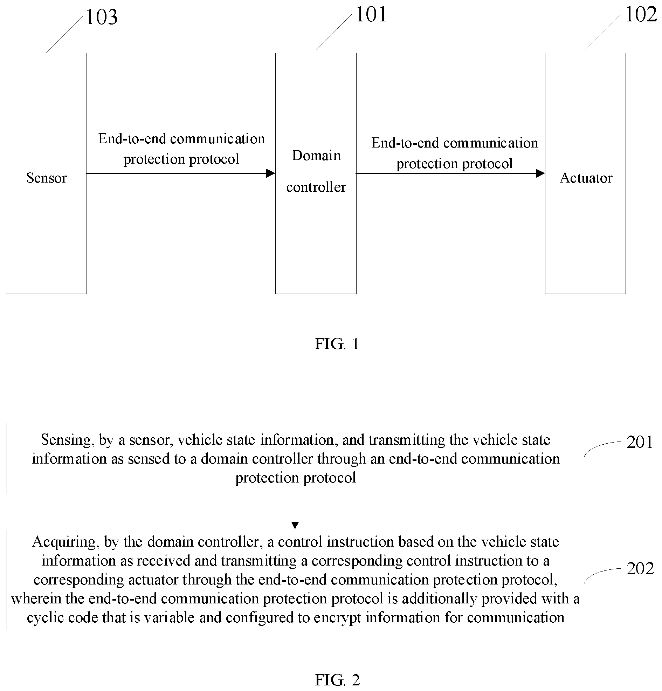

FIG. 1 is a schematic diagram of a communication system based on end-to-end data encryption according to some embodiments of the present disclosure. Referring to FIG. 1, the communication system based on end-to-end data encryption according to the embodiments of the present disclosure includes a domain controller 101, an actuator 102, and a sensor 103. In other words, the data encryption communication system according to the embodiments of the present disclosure is implemented based on an E2E communication protection protocol.

In the specific implementation, the sensor 103 is configured to sense vehicle state information and transmit the sensed vehicle state information to the domain controller 101 through the E2E communication protection protocol.

In the embodiments of the present disclosure, the sensor 103 belongs to a transmitting end and performs encryption processing on the vehicle state information. In other words, the domain controller 101 receives the protected data that is encrypted.

For example, the sensor 103 includes, but is not limited to, components such as a vehicle speed sensor and a vehicle angular velocity sensor, that sense the vehicle state information. Accordingly, the vehicle state information includes vehicle speed, vehicle angular velocity, and the like.

In the specific implementation, the domain controller 101 is configured to transmit a corresponding control instruction to a corresponding actuator through the E2E communication protection protocol based on the received vehicle state information. The E2E communication protection protocol is additionally provided with a cyclic code that is variable and configured to encrypt information for communication.

In the embodiments of the present disclosure, the domain controller 101 acts as both a transmitting end and a receiving end, and performs encryption processing on the control instruction. The actuator 102 is a receiving end and receives the protected data that is encrypted.

It should be noted that the variable cyclic code here means that the cyclic code in the data transmitted with each message can change. The cyclic codes in the data transmitted with two consecutive messages can be the same or different.

Therefore, a sensor senses vehicle state information and transmits the sensed vehicle state information to a domain controller through an E2E communication protection protocol; and the domain controller acquires a control instruction based on the received vehicle state information, and transmits a corresponding control instruction to a corresponding actuator through the E2E communication protection protocol. The present disclosure uses the E2E communication protection protocol and achieves data protection by incorporating a variable cyclic code for data encryption, which enhances the stability of vehicle operation, makes the autonomous driving system more efficient, and improves the real-time performance of data-encrypted communication.

In some embodiments, the data in the E2E communication protection protocol includes a plurality of data identifiers (Data IDs) arranged in sequence, and each data identifier is configured to identify data.

In some embodiments, in the data buffer processed by the E2E communication protection protocol, Data[0] is configured to identify a CRC checksum. In other words, the first data identifier (Data[0]) of the plurality of data identifiers (Data IDs) is configured to identify a cyclic redundancy check code, i.e., the CRC checksum.

In some embodiments, in the data buffer processed by the E2E communication protection protocol, the lower four bits of Data[1] store a Counter, and the upper four bits of Data[1] are for the cyclic code. In other words, the second data identifier (Data[1]) of the plurality of data identifiers (Data IDs) is configured to identify the cyclic code and a counter code, i.e., Counter. The first four data sub-bits of the second data identifier (Data[1]) are configured to identify the cyclic code, and the last four data sub-bits of the second data identifier (Data[1]) are configured to identify the counter code (Counter).

In some embodiments, in the data buffer processed by the E2E communication protection protocol, the protected data that is encrypted is stored starting from Data[2]. In other words, the third data identifier (Data[2]) of the plurality of data identifiers (Data IDs) is configured to identify the protected data that is encrypted.

In some embodiments, confidential data and the cyclic code are encrypted through an XOR operation. It is understood that the confidential data in the present disclosure refers to the protected data, that is, the protected data and the cyclic code are encrypted through the XOR operation.

In some embodiments, the sensor is specifically configured to determine data of the second data identifier (Data[1]) based on the cyclic code in combination with an XOR logic; and acquire data of the third data identifier (Data[2]) based on the data of the second data identifier (Data[1]) in combination with the XOR logic.

In some embodiments, the domain controller is specifically configured to determine whether the verification is qualified based on the received vehicle state information; and acquire, in response to the verification being qualified, the control instruction by decoding.

In the embodiments of the present disclosure, three data elements are introduced into the E2E communication protection protocol: a cyclic code, a Counter, and a CRC checksum. The data is encrypted through a variable cyclic code and transmitted together from the transmitting end to the receiving end to achieve data protection. Data[0] stores the CRC checksum, the lower four bits of Data[1] store the Counter, and the upper four bits of Data[1] are for the cyclic code. Starting from Data[2], the protected data that is encrypted is stored. The field for the CRC checksum calculation may be configured by the user, and the checksum includes the Data ID part and all data excluding the CRC identification field.

The embodiments of the present disclosure are further described hereinafter in conjunction with Table 1.

The data buffer (Buffer) after E2E processing is distributed as follows. Data[0] stores the CRC checksum, the lower four bits of Data[1] store the Counter, and the upper four bits of Data[1] are for the cyclic code. Starting from Data[2], the protected data that is encrypted is stored, as shown in Table 1.

**Table 1 Data Buffer**

| Data ID | Data[0] | Data[1] | | Data[2] | ... | ... | ... | Data[N-1] | Data[N] |
|---|---|---|---|---|---|---|---|---|---|
| Data ID | CRC | cyclic code | counter | Data[2'] | ... | ... | ... | Data[N'-1] | Data[N'] |
| | | A | | | | | | | |

The field involved in the CRC checksum calculation may be configured by the user, and the checksum includes the Data ID part and all data excluding the CRC identification field. Although the Data ID is not explicitly transmitted through the message, its check information is included in the CRC.

It should be noted that adopting E2E secure communication requires the additional introduction of two data elements, namely the Counter and the CRC checksum, which need to be transmitted from the transmitting end to the receiving end along with the protected data.

In the embodiments of the present disclosure, the transmitting end and the receiving end of the E2E maintain an E2E transmitting end state machine and an E2E receiving end state machine, respectively. At the transmitting end, according to the transmitting end state machine, the Counter is first calculated and written into the data buffer. Then, the CRC checksum is calculated based on the protected data, a statically configured Data ID list, and the Counter, and the CRC checksum is written into the transmission buffer. After completing the above operations, the E2E returns the data buffer to the caller, who ultimately sends out the CRC checksum, the Counter, and the protected data together.

The protected data and the cyclic code are encrypted through a predetermined logic (such as XOR).

The following takes XOR (XOR logic) as an example to describe the steps for generating and outputting the Buffer.

The initial cyclic code is 0x05.

| M3 | M2 | M 1 | M 0 | C3 | C2 | C1 | C0 |
|---|---|---|---|---|---|---|---|
| 1 | 0 | 1 | 0 | 0 | 0 | 0 | 0 |

In step 1:

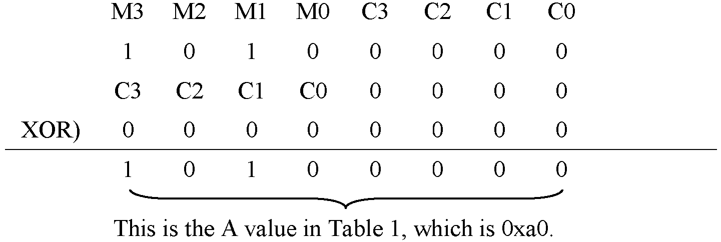

In step 2:

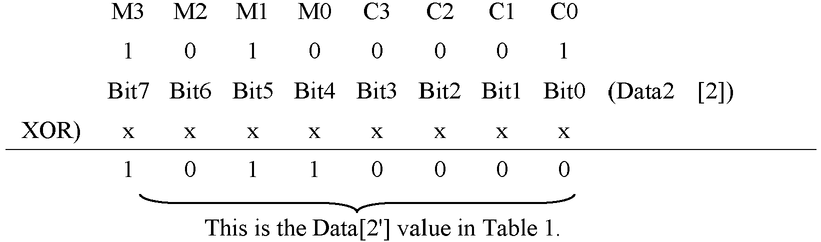

**In** step 3: Data[3'] to Data[N'] is sequentially generated according to step 2.

**In** Step 4: the Buffer is generated and output.

It should be noted that in other embodiments, the protected data and the cyclic code may also be encrypted through other predetermined logic, which is not detailed here.

At the receiving end, according to the receiving end state machine, the expected Counter is first calculated. Then, the CRC checksum is calculated based on the statically configured Data ID list, the Counter, and the received data. Here, the received data refers only to the data that needs to be protected and was transmitted by the transmitting end.

After calculating the CRC checksum, the receiving end compares the calculated CRC checksum with the CRC checksum transmitted by the transmitting end. In response to matching, the receiving end continues to determine whether the Counter matches the expected Counter. In the case that the verification result is completely correct or within a tolerable range, E2E Profile 2 returns a correct return value; and in the case that the verification result has a problem, it is necessary to further analyze the type of error and update the error state into the E2E state machine.

In this way, the data encryption communication system not only can encrypt the data, but can also ensure the verification of data accuracy, and the decryption process is very efficient, thereby realizing the timeliness in practice.

### Second Embodiment

The embodiment provides a communication method based on end-to-end data encryption, and the method is performed based on an E2E communication protection protocol.

FIG. 2 is a flowchart of a communication method based on end-to-end data encryption according to some embodiments of the present disclosure. Referring to FIG. 2, the method includes the following steps.

In step 201, a sensor senses vehicle state information and transmits the vehicle state information as sensed to a domain controller through an E2E communication protection protocol.

In step 202, the domain controller acquires a control instruction based on the vehicle state information as received, and transmits a corresponding control instruction to a corresponding actuator through the E2E communication protection protocol. The E2E communication protection protocol is additionally provided with a cyclic code that is variable and configured to encrypt information for communication.

In some embodiments, the data in the E2E communication protection protocol includes a plurality of data identifiers (Data IDs) arranged in sequence. Each data identifier is configured to identify data.

In some embodiments, in the data buffer processed by the E2E communication protection protocol, Data[0] is configured to identify a CRC checksum. In other words, the first data identifier (Data[0]) of the plurality of data identifiers (Data IDs) is configured to identify a cyclic redundancy check code, i.e., the CRC checksum.

In some embodiments, in the data buffer processed by the E2E communication protection protocol, the lower four bits of Data[1] store the Counter, and the upper four bits of Data[1] are for the cyclic code. In other words, the second data identifier (Data[1]) of the plurality of data identifiers (Data IDs) is configured to identify the cyclic code and a counter code, i.e., the Counter. The first four data sub-bits of the second data identifier (Data[1]) are configured to identify the cyclic code, and the last four data sub-bits of the second data identifier (Data[1]) are configured to identify the counter code (Counter).

In some embodiments, in the data buffer processed by the E2E communication protection protocol, the protected data that is encrypted is stored starting from Data[2]. In other words, the third data identifier (Data[2]) of the plurality of data identifiers (Data IDs) is configured to identify the protected data that is encrypted.

In some embodiments, the sensor determines the data of the second data identifier (Data[1]) based on the cyclic code in combination with an XOR logic; and acquires the data of the third data identifier (Data[2]) based on the data of the second data identifier (Data[1]) in combination with the XOR logic.

In some embodiments, the domain controller determines whether the verification is qualified based on the received vehicle state information; and acquires, in response to the verification being qualified, the control instruction by decoding.

In the embodiments of the present disclosure, three data elements are introduced into the E2E communication protection protocol: a cyclic code, a Counter, and a CRC checksum. The data is encrypted through a variable cyclic code and transmitted together from the transmitting end to the receiving end to achieve data protection. Data[0] stores the CRC checksum, the lower four bits of Data[1] store the Counter, and the upper four bits of Data[1] are for the cyclic code. Starting from Data[2], the protected data that is encrypted is stored. The field for the CRC checksum calculation may be configured by the user, and the checksum includes the Data ID part and all data excluding the CRC identification field.

The specific format of the data buffer (Buffer) processed by the E2E communication protection protocol is shown in Table 1 of the first embodiment, which is not detailed here. In some embodiments, the confidential data and the cyclic code are encrypted through an XOR operation. It is understood that the confidential data in the present disclosure refers to the protected data, that is, the protected data and the cyclic code are encrypted through the XOR operation.

It should be noted that in other embodiments, the protected data and the cyclic code may also be encrypted through other predetermined logic, which is not detailed here.

Therefore, a sensor senses vehicle state information and transmits the sensed vehicle state information to a domain controller through an E2E communication protection protocol; and the domain controller acquires a control instruction based on the received vehicle state information, and transmits a corresponding control instruction to a corresponding actuator through the E2E communication protection protocol. The embodiments of the present disclosure use the E2E communication protection protocol and achieve data protection by incorporating a variable cyclic code for data encryption, which enhances the stability of vehicle operation, makes the autonomous driving system more efficient, and improves the real-time performance of data-encrypted communication.

In the present disclosure, the terms "first" and "second" are merely used for descriptive purposes and should not be construed as indicating or implying the relative importance. The term "a plurality of" refers to two or more, unless otherwise explicitly defined.

Other embodiments of the present disclosure are apparent to those skilled in the art from consideration of the specification and practice of the present disclosure disclosed herein. The present disclosure is intended to cover any variations, uses, or adaptations of the present disclosure following the general principles of the present disclosure and including known common knowledge or customary technical means undisclosed in the art of the present disclosure. The specification and embodiments are only considered exemplary.

It will be understood that the present disclosure is not limited to the precise arrangements that have been described above and shown in the accompanying drawings, and that various modifications and changes may be made without departing from the scope thereof. The scope of the present disclosure is limited only by the appended claims.

## Claims

1. A communication system based on end-to-end data encryption, comprising a domain controller (101), an actuator (102), and a sensor (103), wherein
the sensor (103) is configured to sense vehicle state information, and transmit the vehicle state information as sensed to the domain controller (101) through an end-to-end communication protection protocol; and
the domain controller (101) is configured to acquire a control instruction based on the vehicle state information as received, and transmit a corresponding control instruction to a corresponding actuator (102) through the end-to-end communication protection protocol,
wherein the end-to-end communication protection protocol is additionally provided with a cyclic code that is variable and configured to encrypt information for communication,
wherein data in the end-to-end communication protection protocol comprises a plurality of data identifiers arranged in sequence, wherein a first data identifier of the plurality of data identifiers is configured to identify a cyclic redundancy check code,
wherein a second data identifier of the plurality of data identifiers is configured to identify the cyclic code and a counter code, wherein first four data sub-bits of the second data identifier are configured to identify the cyclic code, and last four data sub-bits of the second data identifier are configured to identify the counter code.

2. A communication system based on end-to-end data encryption, comprising a domain controller (101), an actuator (102), and a sensor (103), wherein
the sensor (103) is configured to sense vehicle state information, and transmit the vehicle state information as sensed to the domain controller (101) through an end-to-end communication protection protocol; and
the domain controller (101) is configured to acquire a control instruction based on the vehicle state information as received, and transmit a corresponding control instruction to a corresponding actuator (102) through the end-to-end communication protection protocol,
wherein the end-to-end communication protection protocol is additionally provided with a cyclic code that is variable and configured to encrypt information for communication,
wherein data in the end-to-end communication protection protocol comprises a plurality of data identifiers arranged in sequence, wherein a first data identifier of the plurality of data identifiers is configured to identify a cyclic redundancy check code,
wherein a third data identifier of the plurality of data identifiers is configured to identify protected data that is encrypted,
wherein the sensor (103) is specifically configured to determine data of a second data identifier based on the cyclic code in combination with an XOR logic; and acquire data of the third data identifier based on the data of the second data identifier in combination with the XOR logic.

3. The communication system based on end-to-end data encryption according to claim 2, wherein the domain controller (101) is specifically configured to determine whether a verification is qualified based on the vehicle state information as received; and acquire, in response to the verification being qualified, the control instruction by decoding.

4. A communication method based on end-to-end data encryption, comprising:
sensing (201), by a sensor, vehicle state information, and transmitting the vehicle state information as sensed to a domain controller through an end-to-end communication protection protocol; and
acquiring (202), by the domain controller, a control instruction based on the vehicle state information as received and transmitting a corresponding control instruction to a corresponding actuator through the end-to-end communication protection protocol,
wherein the end-to-end communication protection protocol is additionally provided with a cyclic code that is variable and configured to encrypt information for communication,
wherein data in the end-to-end communication protection protocol comprises a plurality of data identifiers arranged in sequence, wherein a first data identifier of the plurality of data identifiers is configured to identify a cyclic redundancy check code,
wherein a second data identifier of the plurality of data identifiers is configured to identify the cyclic code and a counter code, wherein first four data sub-bits of the second data identifier are configured to identify the cyclic code, and last four data sub-bits of the second data identifier are configured to identify the counter code.

5. A communication method based on end-to-end data encryption, comprising:
sensing (201), by a sensor, vehicle state information, and transmitting the vehicle state information as sensed to a domain controller through an end-to-end communication protection protocol; and
acquiring (202), by the domain controller, a control instruction based on the vehicle state information as received and transmitting a corresponding control instruction to a corresponding actuator through the end-to-end communication protection protocol,
wherein the end-to-end communication protection protocol is additionally provided with a cyclic code that is variable and configured to encrypt information for communication,
wherein data in the end-to-end communication protection protocol comprises a plurality of data identifiers arranged in sequence, wherein a first data identifier of the plurality of data identifiers is configured to identify a cyclic redundancy check code,
wherein a third data identifier of the plurality of data identifiers is configured to identify protected data that is encrypted,
wherein the sensor determines data of a second data identifier based on the cyclic code in combination with an XOR logic; and acquires data of the third data identifier based on the data of the second data identifier in combination with the XOR logic.

6. The communication method based on end-to-end data encryption according to claim 5, wherein the domain controller determines whether a verification is qualified based on the vehicle state information as received; and acquires, in response to the verification being qualified, the control instruction by decoding.

## Patentansprüche

1. Kommunikationssystem, das auf Ende-zu-Ende-Datenverschlüsselung basiert, umfassend einen Domänencontroller (101), einen Aktor (102) und einen Sensor (103), wobei
der Sensor (103) dazu ausgebildet ist, Fahrzeugzustandsinformationen zu erfassen und die Fahrzeugzustandsinformationen wie erfasst durch ein Ende-zu-Ende-Kommunikationsschutzprotokoll an den Domänencontroller (101) zu übertragen; und
der Domänencontroller (101) dazu ausgebildet ist, basierend auf den Fahrzeugzustandsinformationen wie empfangen eine Steueranweisung zu erlangen und eine entsprechende Steueranweisung durch das Ende-zu-Ende-Kommunikationsschutzprotokoll an einen entsprechenden Aktor (102) zu übertragen,
wobei das Ende-zu-Ende-Kommunikationsschutzprotokoll zusätzlich mit einem zyklischen Code bereitgestellt ist, der variabel ist und dazu ausgebildet ist, Informationen zur Kommunikation zu verschlüsseln,
wobei Daten in dem Ende-zu-Ende-Kommunikationsschutzprotokoll eine Vielzahl von nacheinander angeordneten Datenkennungen umfassen, wobei eine erste Datenkennung der Vielzahl von Datenkennungen dazu ausgebildet ist, einen zyklischen Redundanzprüfcode zu identifizieren,
wobei eine zweite Datenkennung der Vielzahl von Datenkennungen dazu ausgebildet ist, den zyklischen Code und einen Zählercode zu identifizieren, wobei erste vier Daten-Teilbits der zweiten Datenkennung dazu ausgebildet sind, den zyklischen Code zu identifizieren, und letzte vier Daten-Teilbits der zweiten Datenkennung dazu ausgebildet sind, den Zählercode zu identifizieren.

2. Kommunikationssystem, das auf Ende-zu-Ende-Datenverschlüsselung basiert, umfassend einen Domänencontroller (101), einen Aktor (102) und einen Sensor (103), wobei
der Sensor (103) dazu ausgebildet ist, Fahrzeugzustandsinformationen zu erfassen und die Fahrzeugzustandsinformationen wie erfasst durch ein Ende-zu-Ende-Kommunikationsschutzprotokoll an den Domänencontroller (101) zu übertragen; und
der Domänencontroller (101) dazu ausgebildet ist, basierend auf den Fahrzeugzustandsinformationen wie empfangen eine Steueranweisung zu erlangen und eine entsprechende Steueranweisung durch das Ende-zu-Ende-Kommunikationsschutzprotokoll an einen entsprechenden Aktor (102) zu übertragen,
wobei das Ende-zu-Ende-Kommunikationsschutzprotokoll zusätzlich mit einem zyklischen Code bereitgestellt ist, der variabel ist und dazu ausgebildet ist, Informationen zur Kommunikation zu verschlüsseln,
wobei Daten in dem Ende-zu-Ende-Kommunikationsschutzprotokoll eine Vielzahl von nacheinander angeordneten Datenkennungen umfassen, wobei eine erste Datenkennung der Vielzahl von Datenkennungen dazu ausgebildet ist, einen zyklischen Redundanzprüfcode zu identifizieren,
wobei eine dritte Datenkennung der Vielzahl von Datenkennungen dazu ausgebildet ist, geschützte Daten zu identifizieren, die verschlüsselt sind,
wobei der Sensor (103) speziell dazu ausgebildet ist, Daten einer zweiten Datenkennung basierend auf dem zyklischen Code in Kombination mit einer XOR-Logik zu bestimmen; und Daten der dritten Datenkennung basierend auf den Daten der zweiten Datenkennung in Kombination mit der XOR-Logik zu erlangen.

3. Kommunikationssystem, das auf Ende-zu-Ende-Datenverschlüsselung basiert, nach Anspruch 2, wobei der Domänencontroller (101) speziell dazu ausgebildet ist, basierend auf den Fahrzeugzustandsinformationen wie empfangen zu bestimmen, ob eine Verifizierung gültig ist; und als Reaktion darauf, dass die Verifizierung gültig ist, die Steueranweisung durch Decodieren zu erlangen.

4. Kommunikationsverfahren, das auf Ende-zu-Ende-Datenverschlüsselung basiert, umfassend:
Erfassen (201) von Fahrzeugzustandsinformationen und Übertragen der Fahrzeugzustandsinformationen wie erfasst durch ein Ende-zu-Ende-Kommunikationsschutzprotokoll an einen Domänencontroller durch einen Sensor; und
Erlangen (202) einer Steueranweisung basierend auf den Fahrzeugzustandsinformationen wie empfangen und Übertragen einer entsprechenden Steueranweisung durch das Ende-zu-Ende-Kommunikationsschutzprotokoll an einen entsprechenden Aktor durch den Domänencontroller,
wobei das Ende-zu-Ende-Kommunikationsschutzprotokoll zusätzlich mit einem zyklischen Code bereitgestellt ist, der variabel ist und dazu ausgebildet ist, Informationen zur Kommunikation zu verschlüsseln,
wobei Daten in dem Ende-zu-Ende-Kommunikationsschutzprotokoll eine Vielzahl von nacheinander angeordneten Datenkennungen umfassen, wobei eine erste Datenkennung der Vielzahl von Datenkennungen dazu ausgebildet ist, einen zyklischen Redundanzprüfcode zu identifizieren,
wobei eine zweite Datenkennung der Vielzahl von Datenkennungen dazu ausgebildet ist, den zyklischen Code und einen Zählercode zu identifizieren, wobei erste vier Daten-Teilbits der zweiten Datenkennung dazu ausgebildet sind, den zyklischen Code zu identifizieren, und letzte vier Daten-Teilbits der zweiten Datenkennung dazu ausgebildet sind, den Zählercode zu identifizieren.

5. Kommunikationsverfahren, das auf Ende-zu-Ende-Datenverschlüsselung basiert, umfassend:
Erfassen (201) von Fahrzeugzustandsinformationen und Übertragen der Fahrzeugzustandsinformationen wie erfasst durch ein Ende-zu-Ende-Kommunikationsschutzprotokoll an einen Domänencontroller durch einen Sensor; und
Erlangen (202) einer Steueranweisung basierend auf den Fahrzeugzustandsinformationen wie empfangen und Übertragen einer entsprechenden Steueranweisung durch das Ende-zu-Ende-Kommunikationsschutzprotokoll an einen entsprechenden Aktor durch den Domänencontroller,
wobei das Ende-zu-Ende-Kommunikationsschutzprotokoll zusätzlich mit einem zyklischen Code bereitgestellt ist, der variabel ist und dazu ausgebildet ist, Informationen zur Kommunikation zu verschlüsseln,
wobei Daten in dem Ende-zu-Ende-Kommunikationsschutzprotokoll eine Vielzahl von nacheinander angeordneten Datenkennungen umfassen, wobei eine erste Datenkennung der Vielzahl von Datenkennungen dazu ausgebildet ist, einen zyklischen Redundanzprüfcode zu identifizieren,
wobei eine dritte Datenkennung der Vielzahl von Datenkennungen dazu ausgebildet ist, geschützte Daten zu identifizieren, die verschlüsselt sind,
wobei der Sensor Daten einer zweiten Datenkennung basierend auf dem zyklischen Code in Kombination mit einer XOR-Logik bestimmt; und Daten der dritten Datenkennung basierend auf den Daten der zweiten Datenkennung in Kombination mit der XOR-Logik erlangt.

6. Kommunikationsverfahren, das auf Ende-zu-Ende-Datenverschlüsselung basiert, nach Anspruch 5, wobei der Domänencontroller basierend auf den Fahrzeugzustandsinformationen wie empfangen bestimmt, ob eine Verifizierung gültig ist; und als Reaktion darauf, dass die Verifizierung gültig ist, die Steueranweisung durch Decodieren erlangt.

## Revendications

1. Système de communication basé sur un chiffrement de données de bout en bout, comprenant un contrôleur de domaine (101), un actionneur (102) et un capteur (103), dans lequel
le capteur (103) est configuré pour détecter des informations d'état du véhicule, et transmettre les informations d'état du véhicule ainsi détectées au contrôleur de domaine (101) par l'intermédiaire d'un protocole de protection de communication de bout en bout ; et
le contrôleur de domaine (101) est configuré pour obtenir une instruction de commande sur la base des informations d'état du véhicule ainsi reçues, et transmettre une instruction de commande correspondante à un actionneur (102) correspondant par l'intermédiaire du protocole de protection de communication de bout en bout,
dans lequel le protocole de protection de communication de bout en bout est en outre muni d'un code cyclique qui est variable et configuré pour chiffrer des informations pour la communication,
dans lequel des données dans le protocole de protection de communication de bout en bout comprennent une pluralité d'identifiants de données agencés en séquence, dans lequel un premier identifiant de données de la pluralité d'identifiants de données est configuré pour identifier un code de contrôle de redondance cyclique,
dans lequel un deuxième identifiant de données de la pluralité d'identifiants de données est configuré pour identifier le code cyclique et un code compteur, dans lequel les quatre premiers sous-bits de données du deuxième identifiant de données sont configurés pour identifier le code cyclique, et les quatre derniers sous-bits de données du deuxième identifiant de données sont configurés pour identifier le code compteur.

2. Système de communication basé sur un chiffrement de données de bout en bout, comprenant un contrôleur de domaine (101), un actionneur (102) et un capteur (103), dans lequel
le capteur (103) est configuré pour détecter des informations d'état du véhicule, et transmettre les informations d'état du véhicule ainsi détectées au contrôleur de domaine (101) par l'intermédiaire d'un protocole de protection de communication de bout en bout ; et
le contrôleur de domaine (101) est configuré pour obtenir une instruction de commande sur la base des informations d'état du véhicule ainsi reçues, et transmettre une instruction de commande correspondante à un actionneur (102) correspondant par l'intermédiaire du protocole de protection de communication de bout en bout,
dans lequel le protocole de protection de communication de bout en bout est en outre muni d'un code cyclique qui est variable et configuré pour chiffrer des informations pour la communication,
dans lequel des données dans le protocole de protection de communication de bout en bout comprennent une pluralité d'identifiants de données agencés en séquence, dans lequel un premier identifiant de données de la pluralité d'identifiants de données est configuré pour identifier un code de contrôle de redondance cyclique,
dans lequel un troisième identifiant de données de la pluralité d'identifiants de données est configuré pour identifier des données protégées qui sont chiffrées,
dans lequel le capteur (103) est spécifiquement configuré pour déterminer des données d'un deuxième identifiant de données sur la base du code cyclique en combinaison avec une logique XOR ; et obtenir des données du troisième identifiant de données sur la base des données du deuxième identifiant de données en combinaison avec la logique XOR.

3. Système de communication basé sur un chiffrement de données de bout en bout selon la revendication 2, dans lequel le contrôleur de domaine (101) est spécifiquement configuré pour déterminer si la vérification est qualifiée sur la base des informations d'état du véhicule ainsi reçues ; et obtenir, en réponse au fait que la vérification est qualifiée, l'instruction de commande par décodage.

4. Procédé de communication basé sur un chiffrement de données de bout en bout, comprenant les étapes consistant à :
détecter (201), par un capteur, des informations d'état du véhicule, et transmettre les informations d'état du véhicule ainsi détectées à un contrôleur de domaine par l'intermédiaire d'un protocole de protection de communication de bout en bout ; et
obtenir (202), par le contrôleur de domaine, une instruction de commande sur la base des informations d'état du véhicule telles que reçues et transmettre une instruction de commande correspondante à un actionneur correspondant par l'intermédiaire du protocole de protection de communication de bout en bout,
dans lequel le protocole de protection de communication de bout en bout est en outre muni d'un code cyclique qui est variable et configuré pour chiffrer des informations pour la communication,
dans lequel des données dans le protocole de protection de communication de bout en bout comprennent une pluralité d'identifiants de données agencés en séquence, dans lequel un premier identifiant de données de la pluralité d'identifiants de données est configuré pour identifier un code de contrôle de redondance cyclique,
dans lequel un deuxième identifiant de données de la pluralité d'identifiants de données est configuré pour identifier le code cyclique et un code compteur, dans lequel les quatre premiers sous-bits de données du deuxième identifiant de données sont configurés pour identifier le code cyclique, et les quatre derniers sous-bits de données du deuxième identifiant de données sont configurés pour identifier le code compteur.

5. Procédé de communication basé sur un chiffrement de données de bout en bout, comprenant les étapes consistant à :
détecter (201), par un capteur, des informations d'état du véhicule, et transmettre les informations d'état du véhicule ainsi détectées à un contrôleur de domaine par l'intermédiaire d'un protocole de protection de communication de bout en bout ; et
obtenir (202), par le contrôleur de domaine, une instruction de commande sur la base des informations d'état du véhicule telles que reçues et transmettre une instruction de commande correspondante à un actionneur correspondant par l'intermédiaire du protocole de protection de communication de bout en bout,
dans lequel le protocole de protection de communication de bout en bout est en outre muni d'un code cyclique qui est variable et configuré pour chiffrer des informations pour la communication,
dans lequel des données dans le protocole de protection de communication de bout en bout comprennent une pluralité d'identifiants de données agencés en séquence, dans lequel un premier identifiant de données de la pluralité d'identifiants de données est configuré pour identifier un code de contrôle de redondance cyclique,
dans lequel un troisième identifiant de données de la pluralité d'identifiants de données est configuré pour identifier des données protégées qui sont chiffrées,
dans lequel le capteur détermine des données d'un deuxième identifiant de données sur la base du code cyclique en combinaison avec une logique XOR ; et obtient des données du troisième identifiant de données sur la base des données du deuxième identifiant de données en combinaison avec la logique XOR.

6. Procédé de communication basé sur un chiffrement de données de bout en bout selon la revendication 5, dans lequel le contrôleur de domaine détermine si la vérification est qualifiée sur la base des informations d'état du véhicule ainsi reçues ; et obtient, en réponse au fait que la vérification est qualifiée, l'instruction de commande par décodage.
